Europäisches Patentamt

European Patent Office

Office européen des brevets

(11) Veröffentlichungsnummer: **0 503 493 A1**

## (12) EUROPÄISCHE PATENTANMELDUNG

(21) Anmeldenummer: **92103839.4**

(22) Anmeldetag: **06.03.92**

(51) Int. Cl.5: **B60R 15/00, B60P 3/36**

(30) Priorität: **09.03.91 DE 4107698**

(43) Veröffentlichungstag der Anmeldung:
**16.09.92 Patentblatt 92/38**

(84) Benannte Vertragsstaaten:
**BE DE FR GB IT NL**

(71) Anmelder: **DETHLEFFS GmbH**
**Rangenbergweg**
**W-7972 Isny(DE)**

(72) Erfinder: **Schmidt, Gerhard**
**Am Dreifingerbach 27**
**W-7972 Isny(DE)**

(74) Vertreter: **Patentanwälte Dipl.-Ing. E. Eisele**
**Dr.-Ing. H. Otten**
**Seestrasse 42**
**W-7980 Ravensburg(DE)**

(54) **Campingfahrzeug.**

(57) Bei einem Campingfahrzeug (1) mit verhältnismäßig kleinem Grundriß, insbesondere einer Breite von weniger als 1,9 m, wird eine Grundrißgestaltung angegeben, die es erlaubt, außer einer Kücheneinrichtung (6) und einem Schrank (9) auch noch eine Wasch- und/oder Toiletteneinrichtung (7, 8) unterzubringen. Die Kücheneinrichtung (6) und die Wasch- und/oder Toiletteneinrichtung (7, 8) sind einander zugewandt angeordnet und der Schrank (9) ist zwischen beiden Einrichtungen verschiebbar gelagert. Insbesondere kann der Schrank eine gegenüber seinem Innenraum geschlossene Nische (11) aufweisen, welche den am weitesten vorstehenden Teil der Wasch- und/oder Toiletteneinrichtung (7, 8) aufnimmt. Der Schrank (9) kann an der Fahrzeugdecke an horizontalen Führungsschienen aufgehängt sein.

Fig.1

EP 0 503 493 A1

Die Erfindung betrifft ein Campingfahrzeug nach dem Oberbegriff des Anspruchs 1 und befaßt sich mit dem Problem der Grundrißgestaltung insbesondere bei kleinen Fahrzeugen.

Der Grundriß der Inneneinrichtung eines solchen Fahrzeugs hängt entscheidend von der Anordnung der Schlafplätze ab. Wenn z.B. ein Fahrzeug mit Kastenaufbau als Wohnmobil ausgebaut werden soll, das eine Innenbreite von weniger als 1,90 Meter hat, so können die Liegen nur in Längsrichtung aufgestellt werden. Ist aber auch die Innenlänge auf etwa 2,80 Meter beschränkt, so bleibt nur noch wenig Wandfläche. Das bedeutet, daß außer der Küche und dem unverzichtbaren Schrank ein Wasch- und/oder Toilettenraum keinen Platz mehr hat.

Der Erfindung liegt die Aufgabe zugrunde, anzugeben, wie in einem kleinen Fahrzeug außer der Kücheneinrichtung sowohl ein Schrank als auch eine Wasch- und/oder Toiletteneinrichtung untergebracht werden kann.

Diese Aufgabe wird erfindungsgemäß dadurch gelöst, daß die Kücheneinrichtung und die Wasch- und/oder Toiletteneinrichtung einander zugewandt angeordnet sind und der Schrank zwischen beiden Einrichtungen verschiebbar gelagert ist. Dadurch wird erreicht, daß der zwischen den beiden zweizeilig angeordneten Einrichtungen noch vorhandene Stehplatz wahlweise je nach der Stellung des Schrankes entweder der Küche oder der Toilette zugeordnet werden kann. Normalerweise wird man die Türen des Schranks an seiner der Küche zugewandten Seite anordnen. Er kann somit geöffnet werden, wenn man ihn zur Toilette hin verschiebt.

Weiterer Raum kann dadurch gewonnen werden, daß der Schrank an seiner der Wasch- und/oder Toiletteneinrichtung zugewandten Seite eine Nische aufweist, welche wenigstens den am weitesten vorstehenden Teil der Wasch- und/oder Toiletteneinrichtung aufnimmt und gegen den übrigen Schrankinnenraum abgeschlossen ist. Gewöhnlich ist die Toilettenschüssel der am weitesten vorstehende Teil, Waschbecken sind häufig hochklappbar. In diesem Fall kann der Schrank bis an das hochgeklappte Waschbecken herangeschoben werden, während eine in seinem unteren Bereich angeordnete Nische geringerer Tiefe als die Schranktiefe den vorderen Teil des Toilettenkörpers aufnimmt. Der Schrank ist somit als Kleiderschrank voll nutzbar und hat nur im unteren Teil eine geringere Tiefe.

Der Schrank könnte auf Bodenschienen verfahrbar sein. Das bringt jedoch Reinigungsprobleme mit sich. Es wird daher vorgeschlagen, daß der Schrank an in seinem oberen Bereich angeordneten Führungsschienen aufgehängt ist. Insbesondere kann der Schrank an Rollen oder Gleitkufen hängen, die in die Führungsschienen eingreifen.

Die Führungsschienen können an der Dach- oder Wandkonstruktion des Fahrzeugs oder an besonderen horizontalen Tragschienen angebracht sein. Zweckmäßigerweise sollte der Schrank ferner durch Riegel oder dergleichen in seiner jeweiligen Stellung arretiert werden können.

Besonders vorteilhaft ist es, wenn die Kücheneinrichtung an der einen und die Wasch- und/oder Toiletteneinrichtung an der anderen Längswand im Bug- oder Heckbereich eines Wagens angeordnet ist. Zu denken ist hier an den eingangs erwähnten schmalen Kastenwagen, der diese Anordnung im Heckbereich aufnimmt und möglicherweise eine Hecktür hat, welche unmittelbaren Zugang zur Küche und zum Schrank bietet. Ferner kann es zweckmäßig sein, daß der Wasch- und/oder Toilettenraum durch eine in gleicher Richtung wie der Schrank bewegliche Schiebetür vom übrigen Fahrzeuginnenraum abschließbar ist.

Abgesehen von den vorerwähnten, räumlich stark beschränkten Fahrzeugen kann die Grundrißanordnung aber auch bei größeren Fahrzeugen einer willkommenen Erhöhung der Bewegungsfreiheit dienen. Man ist für diesen Einbau nicht auf einen bestimmten Ort im Fahrzeug angewiesen. Die Führungsschienen können auch in Fahrtrichtung angeordnet werden.

Die Erfindung wird anhand eines Ausführungsbeispiels näher erläutert. In der zugehörigen Zeichnung zeigt

Fig. 1    den Grundriß eines Wohnmobils und
Fig. 2    die Heckansicht dieses Fahrzeugs ohne die Rückwand.

Das Fahrzeug besitzt einen kastenförmigen Aufbau 1, der mit Einbauten für Campingzwecke versehen ist. An die Vordersitze 2 für den Fahrer und den Beifahrer schließt sich nach hinten ein Wohn- bzw. Schlafabteil an. Die Möblierung besteht aus zwei Sitzbänken 3 mit Tisch 4, die wie üblich zu einer Längsliege umgebaut werden können. An der gegenüberliegenden Seitenwand erstreckt sich eine lange Sitzbank, die mit ihrer Rückenlehne und eventuell weiteren Polstern ebenfalls zu einer Schlafgelegenheit umgestaltet werden kann.

Im Heckraum befindet sich an der rechten Längswand eine Kücheneinrichtung, die zumindest einen Küchenblock 6 mit Kochstellen und einem Spülbecken aufweist, darüber hinaus aber auch noch einen nicht dargestellten Oberschrank umfassen kann. An der linken Längswand befindet sich der Stellplatz für eine tragbare Spültoilette 7 und ein wandbefestigtes hochklappbares Waschbecken 8. Zwischen diese Einrichtungen an den beiden Längswänden ist ein mehrtüriger verschiebbarer Schrank 9 in Längsrichtung eingefügt. Er ist an zwei am Dach befestigten, querverlaufenden Führungsschienen 10 mittels kleiner Laufrollen aufgehängt, so daß er leicht hin und her gefahren werden kann. Dabei ist durch nicht dargestellte Riegel oder Klinken dafür gesorgt, daß der Schrank in seinen jeweiligen Endstellungen sicher festgehalten wird bzw. sich selbsttätig arretiert.

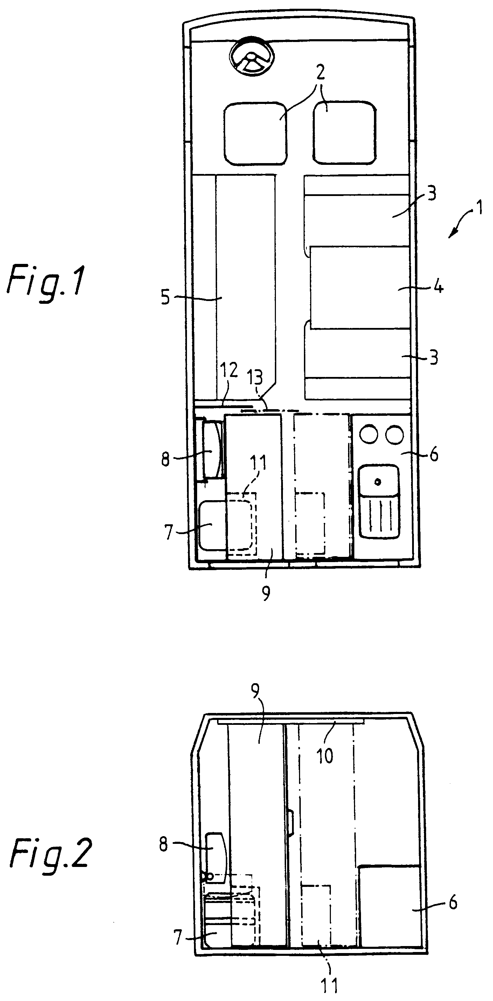

Die Schranktüren sind im Beispiel an der dem Küchenblock 6 zugewandten Seite. Wäre die Rückwand ebenfalls vollflächig, so würde der Schrank an der Spültoilette 7 anstoßen und der Stehplatz vor dem Küchenblock 6 wäre außerordentlich schmal. Deshalb hat der Schrank 9 im unteren Bereich eine zur Spültoilette 7 hin geöffnete Nische 11, die zum Schrankinnenraum hin abgeschlossen ist. Diese nimmt einen Teil der Spültoilette 7 auf, so daß der Schrank 9 bis an das hochgeklappte Waschbecken 8 herangeschoben werden kann, wie in Fig. 2 mit ausgezogenen Strichen dargestellt. Vor dem Küchenblock 6 ist jetzt genügend Stehplatz und genügend Platz zum Öffnen der Schranktüren. Hat das Fahrzeug eine Hecktüre, so ist das Küchenabteil vorteilhafterweise unmittelbar von außen erreichbar.

Um die Spültoilette 7 oder das Waschbecken 8 benutzen zu können, wird der Schrank 9 ganz zum Küchenblock 6 hin verschoben, wie strichpunktiert eingezeichnet. Dadurch ergibt sich ein genügend großer Waschraum, der zum Fahrzeuginneren durch eine feststehende Trennwand 12 und eine Schiebetür 13 abschließbar ist. Wenn sich der Schrank in seiner linken Stellung befindet, kann die Schiebetür soweit zurückgeschoben werden, daß der Durchgang zwischen dem Schrank und dem Küchenblock nicht behindert ist.

| | |
|---|---|
| 1 | Aufbau |
| 2 | Vordersitz |
| 3 | Sitzbank |
| 4 | Tisch |
| 5 | Sitzbank |
| 6 | Küchenblock |
| 7 | Spültoilette |
| 8 | Waschbecken |
| 9 | Schrank |
| 10 | Führungsschiene |
| 11 | Nische |
| 12 | Trennwand |
| 13 | Schiebetür |

**Patentansprüche**

1. Campingfahrzeug mit einer einzeiligen Kücheneinrichtung, einer Wasch- und/oder Toiletteneinrichtung und einem Schrank, dadurch gekennzeichnet, daß die Kücheneinrichtung (6) und die Wasch- und/oder Toiletteneinrichtung (7, 8) einander zugewandt angeordnet sind und der Schrank (9) zwischen beiden Einrichtungen verschiebbar gelagert ist.

2. Campingfahrzeug nach Anspruch 1, dadurch gekennzeichnet, daß der Schrank (9) an seiner der Wasch- und/oder Toiletteneinrichtung (7, 8) zugewandten Seite eine Nische (11) aufweist, welche wenigstens den am weitesten vorstehenden Teil der Wasch- und/oder Toiletteneinrichtung aufnimmt und gegen den übrigen Schrankinnenraum abgeschlossen ist.

3. Campingfahrzeug nach Anspruch 1, dadurch gekennzeichnet, daß der Schrank (9) an in seinem oberen Bereich angeordneten Führungsschienen (10) aufgehängt ist.

4. Campingfahrzeug nach Anspruch 1, dadurch gekennzeichnet, daß der die Wasch- und/oder Toiletteneinrichtung (7, 8) enthaltende Raum durch eine in gleicher Richtung wie der Schrank (9) bewegliche Schiebetür (13) abschließbar ist.

5. Campingfahrzeug nach Anspruch 1, dadurch gekennzeichnet, daß die Kücheneinrichtung (6) an der einen und die Wasch- und/oder Toiletteneinrichtung (7, 8) an der anderen Längswand im Heckbereich des Wagens angeordnet ist.

*Fig.1*

*Fig.2*

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | FR-A-2 472 062 (PERRON)<br>* das ganze Dokument * <br>--- | 1,2 | B60R15/00<br>B60P3/36 |
| X | FR-A-2 552 721 (CENTRE NATIONAL DES INDUSTRIES DE LOISIR)<br>* Seite 4, Zeile 20 - Zeile 25; Abbildungen 1,5,6 * <br>--- | 1,5 | |
| A | GB-A-2 125 739 (CUMMING)<br>--- | | |
| A | DE-U-7 825 008 (FIAT)<br><br>----- | | |
| | | | **RECHERCHIERTE SACHGEBIETE (Int. Cl.5 )**<br><br>B60R<br>B60P |

Der vorliegende Recherchenbericht wurde für alle Patentansprüche erstellt

| Recherchenort | Abschlußdatum der Recherche | Prüfer |
|---|---|---|
| BERLIN | 01 JUNI 1992 | LUDWIG H.J. |